# EUROPEAN PATENT APPLICATION

(11) **EP 2 101 232 A1**
(43) Date of publication of application: **16.09.2009**
(21) Application number: 09162516.0
(22) Date of filing: 24.10.2006
(51) Int. Cl.: G05B 19/042, G05B 19/414, G05B 19/418

(54) **A reliable system for real-time process control**

(62) Divisional of application: 06022203.1
(71) Applicant: Triphase NV, 3001 Leuven (BE)
(72) Inventor: van den Keybus, Jeroen, 3010 Leuven (Kessel-Lo) (BE); Vanassche, Piet Maria André Cornelius, 3052 Oud-Heverlee (Blanden) (BE); Loeckx, Frederik, 3210 Lubbeek (Linden) (BE); Keppens, Hans, 3210 Lubbeek (Linden) (BE)
(74) Representative: BiiP cvba

(57) **Abstract**

In a system for real-time process control according to the invention, plural processing units (501, 502) running either a real-time operating system or a hybrid real-time/non real-time operating system (531, 532; 541, 542) act as redundant real-time computation servers. Actuating/sensing units (521, 522, 523) equipped with an onboard communication interface (511, 512, 513) for client-server communication, act as clients. The actuating/sensing units (521, 522, 523) thereto send messages to the processing units (501, 502) requesting timely evaluation of a computational task. The processing units (501, 502) evaluate the computational task in real-time and send back a response to the onboard communication interface (511, 512, 513) of the requesting client.

## Description

### Field of the Invention

The present invention generally relates to real-time process automation, in particular to the architecture of highly reliable systems for real-time process control such as systems for controlling power electronics applications. Process automation concerns products, services and activities wherein computing hardware, sensors/actuators, and other devices as well as the software thereon are used to automatically monitor, steer and control the behaviour and progress of one or more processes. A process can be the operation of a physical device like a motor, a windmill, a turbine, a machine for producing goods, or of a collection of physical devices. Real-time process automation imposes the additional constraint that the tasks must be completed within a predetermined amount of time.

### Background of the Invention

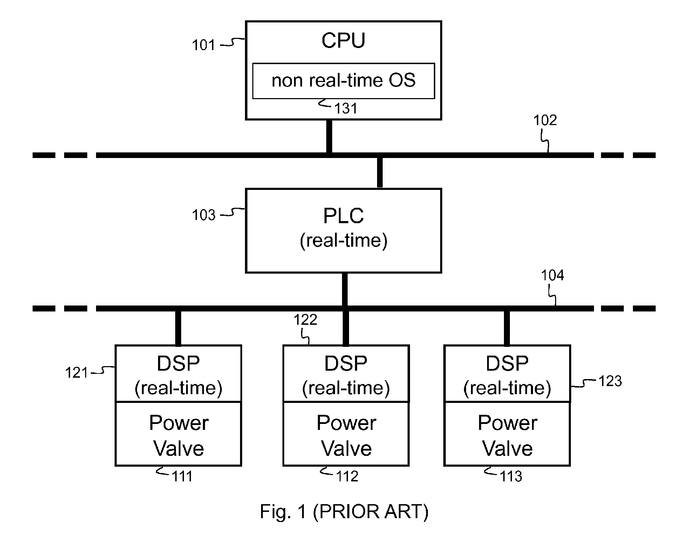

A prior art system for real-time control of electric drives is described in US Patent Application No. 2002/0049505 A1, entitled "Power Section for Driving an Electric Drive, a Drive Control Based Thereon, and a Method for Networking a Control Unit with One or More Power Sections". Therein, a master-slave architecture is disclosed whose intelligence for controlling an electric drive is distributed between a central control unit - R in Fig. 1 - and power sections located near the electric drives - L1, L2 and L3 in Fig1. The central control unit determines desired output values (e.g. voltage values), and parameterizes the power sections at initialisation. In doing so, the central master control unit takes the initiative and instructs the slave power sections. Further real-time safety checking on the basis of detected temperature values is done in the power sections which each have a digital interface with real-time capability and a microprocessor for part of the real-time computational tasks. In other words, the power sections themselves have the intelligence and complexity to receive and process measured values and to generate the gate driver signals in real-time. The communication between the central control unit and the power sections in US 2002/0049505 A1 is synchronized through a digital, synchronous master-slave transmission protocol.

In general, the known process automation systems contain a mixture of different processor hardware operated in a master-slave configuration. This is illustrated by Fig. 1 enclosed in this patent application which shows three power valves 111, 112 and 113 that are controlled by a mixture of digital signal processors (DSPs) 121, 122 and 123 near the power valves 111, 112 and 113. These DSPs 121, 122 and 123 in turn are connected to a programmable logic controller (PLC) 103 via the network 104, the latter PLC 103 being connected to a central processing unit (CPU) 101 via the network 102. From a functional point of view and at the lowest level, algorithms for real-time control, such as drive control, are typically implemented on the digital signal processors (DSPs) 121, 122 and 123 integrated with or located near the devices being controlled. On top of that, algorithms for real-time process control may be implemented on the programmable logic controller processor (PLC) 103. These algorithms, amongst others, provide the control algorithms running on the DSPs 121, 122 and 123 with settings, e.g. the desired speed and torque. Lastly, process visualization as well as more high-level, non real-time tasks such as those implemented by the manufacturing execution system (MES) and enterprise resource planning (ERP) layers, typically occur on personal computers (PCs) or PC-like hardware, like CPU 101 in Fig. 1, that often operate on the basis of a non-real-time operating system, 131 in Fig. 1.

The multitude of hardware platforms and the master-slave architecture that inherently form part of prior art process automation systems impose several difficulties. Firstly, the multitude of hardware platforms introduces substantial interfacing overhead in order to enable all hardware platforms to properly communicate with one another. Moreover, it is hard, if not impossible, to use uniform programming standards because each hardware platform has its own peculiarities and limitations. As such, software maintenance proves to be very difficult in the known process automation systems. Another drawback of the master-slave architecture is that the reliability of the system is determined by the reliability of the master. If the master fails, all dependent slaves also fail.

In traditional master-slave systems, reliability is improved through redundant hardware whereby the master unit would be continuously monitored by a redundant backup unit that assesses if the master unit in operation is still alive.

It is further observed that the low level control loops, e.g. for drive control, are usually implemented on DSP processors. This way, the robustness requirements are achieved just as the stringent requirements on the dynamic response are met. For instance, cycle times below 100 microseconds can be realized through DSP based drive control. However, for cost reasons, the DSPs often have limited computational capacity. The computational capacity of these DSPs does not suffice for complex, high performance control algorithms that, for example, involve the coordination of multiple control loops. On the other hand, the system or application often leaves the available capacity of very powerful processors, e.g. PC processors, unused.

One of the main reasons for selecting DSP and PLC processors in favour of more powerful processors is the required reliability for real-time automated process control. Requested uptimes of 99,99 % are not exceptional. This reliability requirement especially holds for the lowest control level, i.e. the control loops that directly interact with the hardware.

An alternative system for real-time process control is described in the International (PCT) Patent Application WO 98/36518 entitled "Openbus System for Control Automation Networks Incorporating Fuzzy Logic Control". The system described in WO 98/36518 is based on client-server communication between sensors or actuators (470 in Fig. 30 of WO 98/36518) on the one hand and a central processor (node controller #1 or 460 in Fig. 30 of WO 98/36518). As is indicated on page 55, lines 26-28, the node controller #1 can be a PC that runs a real-time operating system like UNIX and acts as a control application server.

In WO 98/36518, the central processor still receives the input data from the sensors or actuators via agents and/or an intermediate node controller (node controller #2) acting as an I/O client, and the central processor still constitutes a single point of failure.

It is an objective of the current invention to provide a highly reliable system for real-time process control which overcomes the aforementioned drawbacks of the prior art systems. In particular, it is an objective of the current invention to disclose a system for real-time process control that optimally uses the processing capabilities of available powerful signal processing hardware such as PCs without trading reliability in the real-time control processes. In addition it is an objective to avoid the distribution of the control intelligence over a multitude of hardware platforms, to avoid the interfacing overhead between such diverse hardware platforms, and to avoid software maintenance difficulties as a result of the diversity in control hardware.

### Summary of the Invention

The aforementioned objectives are achieved and the disadvantages of the prior art solutions are resolved through a client-server system for highly reliable real-time process control as defined by claim 1. Such system has plural processing units, at least one actuating/sensing unit able to communicate with the processing units and a network interconnecting the processing units and at least one actuating/sensing unit. The processing units act as redundant real-time computation servers and run a real-time operating system or a hybrid real-time/non real-time operating system. The actuating/sensing units act as clients and have an onboard communication interface for client-server communication with the processing units through messages requesting timely evaluation of computational tasks, the messages implicitly or explicitly specifying a time constraint for the processing units to respond.

In both the above and the remainder of this patent application, an actuating/sensing unit should be understood as a unit that, amongst others, comprises either sensing hardware able to measure certain process characteristics, actuating hardware able to apply certain stimuli to a process, or both.

Thanks to the invention, the reliability of the system is enhanced. This is realized through a client/multi-server architecture, wherein multiple servers seek to augment system reliability and/or to relax the load per server. Indeed, when two or more processing units are available, the client actuating/sensing units can send their requests to any or a subset of the server processing units. For instance, when using Ethernet networking technology, this may be achieved through the multicast capabilities of the Ethernet protocol and the associated switching hardware, or by providing Virtual Local Area Network (VLAN) capabilities. Each of the consulted servers attempts to execute the requested computational task and send back a response to the client actuating/sensing unit. Prioritizing functionality in the actuating/sensing units may then select a preferred response out of all timely received responses. Thus, if for some reason a server fails, the other servers that receive the client request will take over without knowing about the other server's failure.

By configuring the system according to a client-server architecture wherein the actuating/sensing units are clients that send requests for computation tasks but no longer perform the computations themselves, and wherein processing units such as PCs act as computation servers, all processing functionality becomes concentrated on a single type of hardware platform. As a consequence, the interfacing overhead is substantially reduced to a single, preferably standardized interface between the actuating/sensing units and the processing units. Furthermore, software maintenance has been simplified since only the software running on the processing units has to be maintained.

In the system according to the invention, the main computational tasks are executed by processing units running either a real-time operating system or a hybrid operating system able to manage both real-time and non real-time operations on a single processing unit. Examples of such a processing unit are Intel processors, AMD processors, PowerPC processors, Blackfin processors, and TI C2000, C5000 and C6000 series. Examples of real-time operating systems are Micrium, Nucleus, VxWorks, QNX, On Time RTOS-32 and LynxOS. The hybrid operating systems may for instance be the RTLinux, RTAI or Xenomai operating systems, but also Windows CE or Windows XP with a real-time extension such as ProNoCos Win RT. The combination of processing units and operating systems provides a system that can run local and remote user interfaces and other non real-time processes while simultaneously acting as a real-time computation server that receives and processes requests from client actuating/sensing units in the field. These requests typically comprise demands for the computation server to perform certain computational tasks, e.g. the evaluation of control algorithms, in real-time in order to provide the requesting actuating/sensing unit with its settings or to properly store and propagate sensor information. In order to ensure real-time behaviour, the requests may specify a time span wherein the request must be processed. The requests may optionally include additional information such as measurement values needed by the processing units to perform the computational task. The requested computational tasks may correspond to the evaluation of a control algorithm or a multiplicity of control algorithms, but are obviously not limited thereto.

The current invention further relates to a corresponding method for real-time process control as defined by claim 8.

A particular embodiment of the system for real time process control according to the invention, is adapted for controlling power electronics. In such embodiment, as defined by claim 2, the actuating/sensing units form part of respective power section units, and the processing units act as a servers whereon the power section units are able to schedule the evaluation of computational tasks.

The client power sections comprise power converter valves, sensors for measuring currents, voltages and temperatures, signal processing hardware converting the measurements to digital format, signal processing hardware and communication interfaces to process the measurements, to transmit and receive information to and from the server processing units, and to select among incoming responses. Finally, the response contains signals that are suited to be applied either directly to the power converter valve gate drivers or to the inputs of the Pulse Width Modulation (PWM) generators, located on the client unit, producing the power converter gate driver signals.

As is further specified in claim 3, the embodiment of the system according to the present invention applicable to the control of power electronics, may have actuating/sensing units that sense and digitize a current, a voltage, or a temperature, and convert the sensed current, voltage or temperature into a signal that will form part of the request message.

Thus, requests include all of the necessary measurement information needed for the server to evaluate the control algorithm.

As specified by claim 4, a further option of the system with redundant processing units according to the present invention might be the presence of prioritizing functionality in the actuating/sensing units for selecting a preferred response out of all timely received responses from the redundant processing units.

Thus, the client selects amongst all responses that timely arrive on the basis of some priority scheme. Responses that did not timely arrive are discarded. Due to the client-server architecture of the system according to the present invention, servers do not need to monitor each other for failures. If for some reason a server fails, the other servers that receive the client request will take over without knowing about the other server's failure. It is noticed that this stands in contrast to redundancy in traditional master-slave systems, wherein the master unit would be continuously monitored by a redundant backup unit that assesses if the master unit in operation is still alive. Based on its priority mechanism, the client shall select for instance the response coming from server one unless this server could not timely finish computations, in which case the response from server two gets selected.

Still an optional but advantageous feature of the system according to the present invention is that the redundant processing units may comprise different algorithms for evaluation of the same computational task, as defined by claim 5.

A similar, optional feature, defined in claim 6 is that the redundant processing units may run different real-time or hybrid real-time/non real-time operating systems.

Thus, reliability is further increased by providing functional redundancy on top of the hardware and software redundancy. In other words, the servers are not necessarily similar in hardware, do not necessarily run the same operating system, and do not necessarily apply the same algorithms to respond to requests coming from the clients.

In order to avoid hardware problems, server hardware can differ between the redundant servers. In order to avoid duplicate operating system flaws, operating systems on redundant servers can differ from one another. Lastly, in order to avoid duplicate software bugs, algorithmic implementations used in redundant servers, can be made to differ from each other. The sole requirement is that all algorithms running on different processing units in response to a single request from a client, must provide similar functionality and consequently a similar response. For instance, in response to a request from an actuating/sensing client, one processing unit may run a complex algorithm on an RTLinux operating system, running on a PowerPC, whereas a second processing unit may use a simplified version of the algorithm on a Windows CE operating system and Intel processor. In order to keep the different algorithms on the different servers synchronized, the client may communicate the actually selected response back to the different servers.

Optionally, as defined by claim 7, the system for real-time process control according to the present invention comprises load balancing means for balancing the computational load over the redundant processing units. The corresponding method with load balancing between plural redundant processing units, is defined by claim 9.

Load balancing allows dynamic optimization of processing capacity usage. If for instance a server fails, the load of processes running on that server can be distributed in runtime over the remaining servers. The difference for the client is that it receives the responses from different servers. Processes can be moved from one server to another depending on the CPU load of the different servers. Processes can also be moved from one server to another depending on the server's failure statistics, i.e. its reliability. Processes can also be moved depending on other criteria. Alternatively, the client requests may be dispatched by a dispatch server whereto all the requests are routed. Such dispatch server may for instance dispatch the requests to the processing units with the lowest CPU load.

It is further noticed that the system for real-time process control according to the present invention preferably is executed with a network that has real-time transport capabilities. One example thereof is an Ethernet network, both wired or wireless.

Other suitable network protocols comprise Infiniband, USB, FireWire and PCI Express.

### Brief Description of the Drawings

Fig. 1 illustrates a prior art system for real-time process control, as described above in detail;
Fig. 2 illustrates a system, wherein one processing unit is connected with a plurality of actuating/sensing units, and wherein the client clocks are synchronized with a master clock;
Fig. 3 is a functional block diagram of an actuating/sensing unit used in the system depicted in Fig. 2;
Fig. 4 illustrates the client-server communication between the processing unit and an actuating/sensing unit in the system depicted in Fig. 2;
Fig. 5 illustrates a first embodiment of the system according to the present invention, wherein two processing units are connected with a plurality of actuating/sensing units, and wherein the client clocks are synchronized with a master clock;
Fig. 6 illustrates the functional operation of a second embodiment of the system according to the present invention, wherein the three redundant processing units are provided, and wherein an actuating/sensing unit sends a request to each of the three processing units, receives a response from each of the three processing units, and selects a response on the basis of a priority mechanism;
Fig. 7 illustrates the second embodiment of the system according to the present invention, wherein an actuating/sensing unit sends a request to each of the three processing units, receives a response from a subset of the three processing units, and selects a response on the basis of a priority mechanism;
Fig. 8 illustrates a third embodiment of the system according to the present invention, wherein a load balancing mechanism is used; and
Fig. 9 illustrates a fourth embodiment of the system according to the present invention, in the field of power electronics control.

### Detailed Description of Embodiment(s)

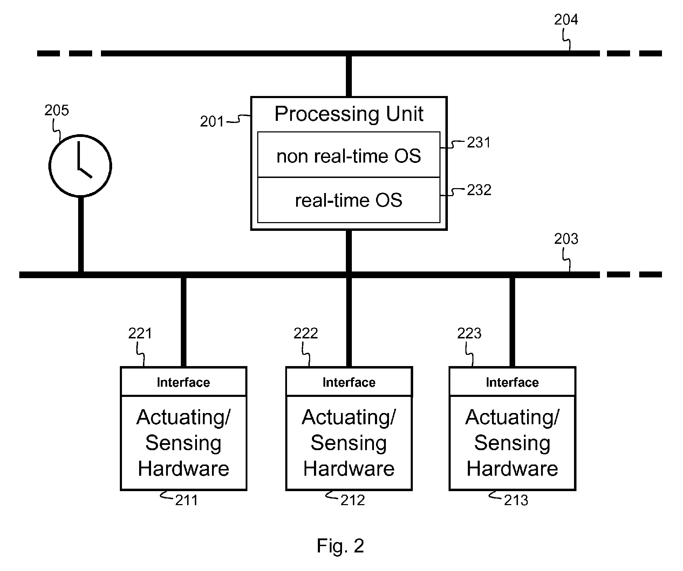

Fig. 2 shows a partial embodiment of the current invention, describing components that relate to the invention's client/server architecture. As such, it shows a system for real-time process control, having a single processing unit 201 that is connected via an Ethernet network 203 to actuating/sensing units having respective actuating/sensing hardware 211, 212 and 213 and respective onboard interfaces 221, 222 and 223. The actuating/sensing units act as clients on the network 203 that provide inputs to the process to be controlled, measure outputs of the process to be controlled, and communicate with the processing unit 201 in order to request computational or other tasks to be executed by this unit 201. The processing unit 201 on the other hand acts as a computation server upon which the client actuating/sensing units can schedule computational or other tasks (e.g. administrative tasks like the registration of configuration settings), both real-time and non real-time. The processing unit 201 can be connected to a corporate network, the Internet or any other external network as is indicated by reference 204 in Fig. 2. In the absence of connectivity 204 to an external network, the system acts as a stand-alone unit. In addition, the system drawn in Fig. 2 comprises a master clock 205. This clock 205 can be a stand-alone unit as shown in Fig. 2. Alternatively, a clock that is integrated into the processing unit 201 or a clock that is integrated in a client actuating/sensing unit could be used.

In the system of Fig. 2, the processing unit 201 runs a hybrid operating system that comprises a non real-time kernel 231 and a real-time kernel 232. The non real-time kernel 231 manages non real-time processes that can include but are not limited to process visualization, management of remote access via the network 204, MES functionality and ERP functionality. The real-time kernel 232 manages real-time processes which are processes that must complete certain actions within a predetermined amount of time. Real-time processes may include but are not limited to control algorithms, optimization tasks, watchdogs and safeguarding processes. Examples of operating systems that provide both a non real-time kernel 231 and a real-time kernel 232 are RTLinux, any Linux installation augmented with the Xenomai extension, Solaris or Open Solaris augmented with the Xenomai extension, Windows CE or Windows XP augmented with a real-time extension.

In a variant of the system drawn in Fig. 2, the processing unit 201 runs an operating system with only a real-time kernel while the non real-time kernel is left out. Examples of such operating systems are Micrium, Nucleus, VxWorks, QNX, On Time RTOS-32 and LynxOS. In such variant, it is much more difficult to integrate non real-time processes, such as process visualization, and real-time processes on the same processing unit without jeopardizing the real-time behaviour.

As already mentioned above, a suitable choice for the network 203 connecting the server processing unit 201 to the client actuating/sensing units is a network based on Ethernet connections. Ethernet, in particular Fast Ethernet, Gbit Ethernet and beyond, offers the bandwidth needed to support the intensive traffic induced by the client-server communication. Furthermore, it is noticed that the network 203 can be implemented using a star-topology, a ring-topology or any other topology.

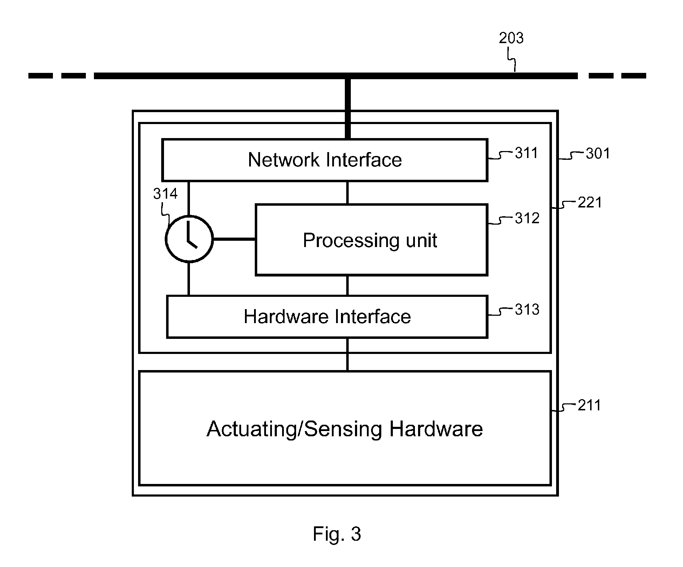

Fig. 3 details the topology of one of the actuating/sensing units 301 from the system illustrated by Fig. 2. The actuating/sensing unit 301 is also called a client unit or client. This client 301 comprises an onboard interface section 221 and a hardware section 211. It is noticed here that where the same references are used in different figures, like 221 in Fig. 2 and Fig. 3, these references denote the same components or elements of the system. The hardware section 211 contains the actuating and/or sensing hardware. The interface section 211 comprises a network interface 311, a processing unit 312, a hardware interface 313, and a clock 314. The network interface 314 connects the client 301 to the Ethernet network 203 via which the client 301 communicates with the processing unit 201 of Fig. 2. This processing unit 201 is also called the computation server or server.

The processing unit 312 inside interface section 221 provides the client 301 with basic signal processing capabilities. These include but are not limited to digitizing measurement signals provided by the hardware sections, signal sampling and filtering, system monitoring and safeguarding operations, sending requests to the computation server 201, and processing the responses received from the computation server 201. The processing unit 312 may for instance be implemented by means of an field programmable gate array (FPGA), a digital signal processor (DSP) or an application specific integrated circuit (ASIC). It is possible that parts of the network interface 311 or the entire network interface 311 as well as parts of the hardware interface 313 or the entire hardware interface 313 are integrated on the FPGA, DSP or ASIC. The interfacing section 221 connects to the actuating/sensing hardware 211 via the hardware interface 313. Via this hardware interface 313, analogue and digital input and output signals are respectively retrieved and set. If needed, this hardware interface 313 also provides galvanic or other types of isolation as required by safety conditions or any kind of specification or regulation.

The clock 314 enables the client unit 301 to autonomously perform operations like measurement sampling, adjusting actuator output settings, sending request towards the computation server 201 on the network 203, implementing time-outs, watchdogs and safety protocols. In one implementation, the clocks of the different clients on the network may remain unsynchronized. In a variant implementation, the clocks of all clients or a subset thereof are synchronized with a master clock like clock 205 in Fig. 2. Such synchronized clocks enable the clients to coordinate their operations with respect to time while maintaining autonomy. The master clock 205 can either be a stand-alone clock, a clock that is integrated into the processing unit 201, or a clock that is integrated in a client actuating/sensing unit like 301. An example of a protocol that can be used to perform the clock synchronization is the IEEE 1588 protocol. Other synchronization protocols are possible as well, and it will be appreciated by the skilled person that the current invention is not restricted by the choice of a particular clock synchronization mechanism. In a preferred embodiment, the exchange of messages needed for clock synchronization is accomplished via the network 203. However, in alternative embodiments, clock synchronization can also be accomplished via a dedicated separate network. It is noticed that synchronizing the clocks in the clients with a master clock in the network or in the central processing unit, does not turn the system into a master-slave architecture as used in the prior art. Even when synchronized to a master clock, the clients according to the present invention remain the active communication partners, i.e. the clients take the initiative for requesting certain computational tasks and certain control operations from the server processing unit 201. This stands in contrast to the prior art master-slave architectures.

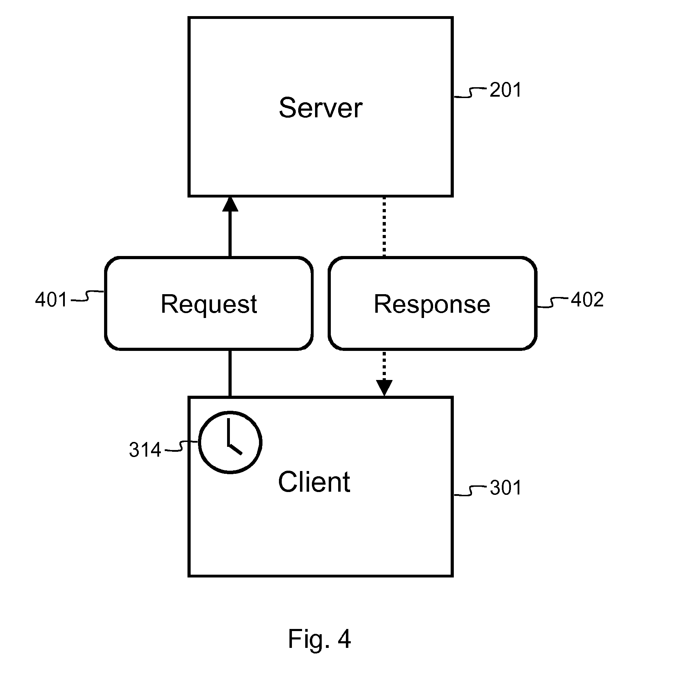

Fig. 4 illustrates the communication protocol between the single processing unit 201 of the system in Fig. 2 and an actuating/sensing unit 301. The protocol implements a client-server mechanism whereby the processing unit 201 acts as the server and the actuating/sensing unit 301 acts as the client. This stands in contrast to the traditional systems that are based on a master-slave communication architecture whereby the processing unit acts as the master and the actuating/sensing unit acts as the slave.

Driven by its internal clock 314, the client 301 sends a request 401 to the server 201, requesting the server 201 to perform certain computational or other tasks. Hence, it is the client 301 which is the active partner that takes the initiative to establish communication with the server 201. Again, this stands in contrast to the traditional master-slave architectures wherein the master or processing unit takes the initiative. The contents of the request message 401 may include a reference identifying the source client 301, a reference identifying the destination server 201, a reference identifying the request 401, a function code identifying the type of request, and all necessary data needed by the server 201 to serve the request 401. Note that this is a non-exhaustive list. Depending on the application, the request may include only some of the above listed fields, or may contain additional fields, not listed here above.

In the implementation where network 203 is using Ethernet connections, the reference identifying the client 301 is the Medium Access Control (MAC) address of the client's network interface, 311 in Fig. 3. The reference to the server 201 in such implementation is either an individual or a multicast MAC address associated with the server's network interface. The reference identifying the request 401 can for instance be implemented as a sequence number generated by the client 301.

In a particular implementation, the request message 401 also includes the time span within which the client 301 expects a response from the server 201. This is the case of applications with real-time requirements. Alternatively, this time span can be specified implicitly through the function code.

The types of functions or computational tasks that a client like 301 can request from a server like 201 include but are not limited to a request for the evaluation of a control algorithm computing client output settings, a request for loading or saving configuration data, a request for timing information, a status notification and an error notification.

In response to the request 401 coming from the client 301, the server 201 performs the requested operations and sends back a response 402 to the client 301. In scheduling the requested operations, the server 201 tries to take into account any timing constraints specified either explicitly or implicitly. The response 402 includes a reference identifying the source sever 201, a reference identifying the destination client 301, a reference identifying the original request 401, and all necessary data associated with the server's response to the client's original request. Again, this is a non-exhaustive list of fields that may form part of the response message 402. Not all of them need to be present, and it is possible additional fields are added.

The client 301 receives the response 402 and deploys the result in a suitable manner. As an example, we consider a scenario whereby the original request 401 involves the evaluation of a real-time control algorithm. If the response 402 sent back by the server 201 is received in time by the client 301, the algorithm's output as contained in the response 402 is deployed by properly adjusting the state of the client's actuating hardware, 211 in Fig. 3. The instance in time when deployment takes place is determined by the client's internal clock 314. If the response 402 arrives early, deployment may be delayed by the client 301 in order to ensure proper coordination of all actions taking place in the overall system.

Any other client on the network 203 interacts with the processing unit 201 in the same manner as described above for the single-client/single-server case illustrated by Fig. 4. Hence, the computational resources of the processing unit 201 can be shared among all clients in the network.

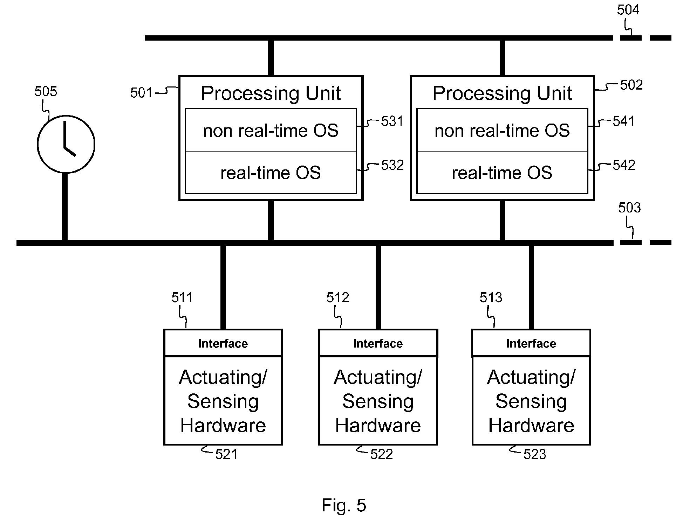

Fig. 5 illustrates the physical setup of a first embodiment of the system according to the current invention, whose setup mainly corresponds to that of Fig. 2, but which in comparison with the system drawn in Fig. 2, has been augmented with a second processing unit 502 acting as a server and connected to the network 503. In the embodiment of Fig. 5, a first processing unit 501 and a second processing unit 502 are connected via an Ethernet based network 503 to client actuating/sensing units, three of which are drawn in Fig. 5. These three actuating/sensing units have respective actuating/sensing hardware 521, 522 and 523, and respective onboard interfaces 511, 512 and 513. The two processing units 501 and 502 again act as computation servers for computational tasks requested by the client actuating/sensing units. Both real-time tasks and non-real time tasks are performed by the processing units 501 and 502, which thereto both run a hybrid operating system (OS) that contains a non-real time component, respectively 531 and 541, and a real-time component, respectively 532 and 542. Similar to the system drawn in Fig. 2, the system illustrated by Fig. 5 further contains a master clock 505, and the redundant processing units 501 and 502 have connectivity to an external network 504. In the system according to the invention with redundant processing units, 501 and 502, a client actuating/sensing unit may send a request to both processing units. Both processing units then independently execute the requested task and respond to the request. In case duplicate responses are received from the two processing units, the client actuating/sensing unit selects one response to use for deployment in the control process. In case of a failing of overloaded processing unit, the client will receive only one response timely, and evidently will use this response in the control process. Instead of sending each client request to the two processing units 501 and 502, the requests can be distributed amongst the processing units 501 and 502 depending in their respective load. Load balancing may be implemented in the client units or in a central unit that receives the requests and dispatches the requests to the processing units 501 and 502 based on knowledge of the actual load of these processors. The system drawn in Fig. 5 can be further augmented by adding any number of servers to the network. This results in a multi-client/multi-server architecture, wherein the extra server(s) seek to augment system reliability and/or to relax the load on the original processing unit 501.

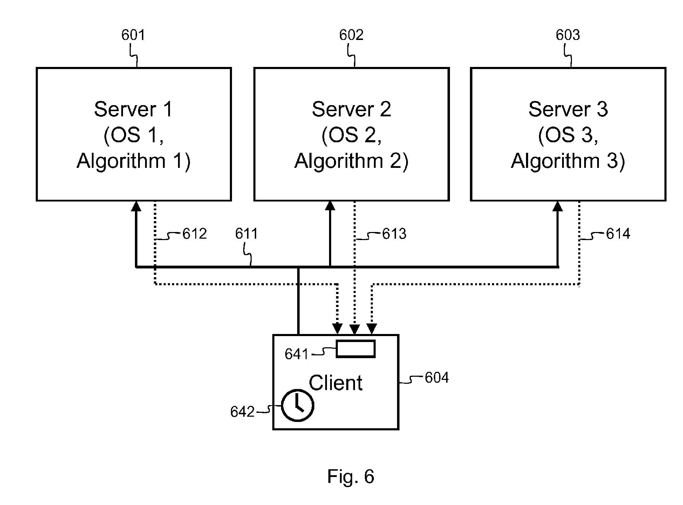

Fig. 6 illustrates the functional operation of a second embodiment, more particularly how the client-server communication mechanism operates in a second embodiment of the present invention having three servers, 601, 602 and 603. Whereas in the first embodiment illustrated by Fig. 5, the processing units 501 and 502 were assumed to be identical both in hardware and operating system, the servers 601, 602 and 603 in the second embodiment illustrated by Fig. 6 differ both in hardware and operating systems. The first server 601 is assumed to run a first hybrid operating system OS 1 and first computational algorithm on first hardware. The second server 602 is assumed to run a second hybrid operating system OS 2 and second computational algorithm on second hardware differing from that of the first server 601. Lastly, the third server 603 is assumed to run a third hybrid operating system OS 3 and third computational algorithm on third processor hardware differing from that of the first and second server, 601 and 602. This way, it is ensured that hardware flaws and flaws in the operating system(s) are not duplicated and do not lead to unrecoverable failures in the control process.

Driven by its internal clock 642, the client actuating/sensing unit 604 sends the same request 611 to all servers, 601, 602 and 603, on the network. Hereby, the client 604 requests each server, i.e. 601, 602 and 603, to perform the same or similar computational or other tasks. The request message 611 may include the following, non-exhaustive list of fields: a reference identifying the source client 604, a reference identifying the destination servers 601, 602 and 603, content identical or similar to the single-client/single-server case described above with reference to Fig. 4. If it is again assumed that the network interconnecting the clients and servers is implemented using Ethernet connections, the reference identifying the client 604 shall be the MAC address of the client's network interface 641. The reference to the servers 601, 602 and 603, shall either be a set of individual MAC addresses or a single multicast MAC address.

In response to the request 611 coming from the client 604, each of the servers 601, 602 and 603 performs the requested operations and sends back a response to the client. In Fig. 6, the responses coming from servers 601, 602 and 603 are respectively denoted by the references 612, 613 and 614. In scheduling the requested operations, the servers 601, 602 and 603 try to take into account any timing constraints specified either explicitly or implicitly. The contents of the responses are identical or similar to that of the single-client/single-server case described above with reference to Fig. 4, except possibly for a priority code that each of the servers 601, 602 and 603 assigns to its response, 612, 613 or 614.

Out of all responses that arrive within the given time constraint, the client 604 selects the response it will deploy based on a prioritization mechanism. As an example, a scenario can be considered wherein the original request 611 involves the evaluation of a real-time control algorithm. Among the responses 612, 613 and 614 sent back by the servers 601, 602 and 603, the interfacing 641 in client 604 makes a selection based on the priority associated with each response. The selected response is then deployed by the client 604. All other responses are discarded. The instance in time when deployment takes place is determined by the client's internal clock 642. Hence, if the responses 612, 613 and 614 arrive early, deployment may be delayed by the client 604 in order to ensure proper coordination of all actions taking place in the overall system. If none of the responses 612, 613 and 614 arrive in time, the client 604 may decide to use a substitute generated by its local processing unit that forms part of interface 641, or it may decide to shut down and send an error notification. In one possible implementation, the prioritization mechanism used to select a response is based on the sequential order wherein the responses arrive. In another possible implementation, the prioritization mechanism is based on a priority code that is either included explicitly in the servers' responses or that is implicitly associated with a reference identifying the server that has generated the response.

Any other client in the network, not drawn in Fig. 6, interacts with all or a subset of the processing units 601, 602 and 603 in the same manner as described above for the single-client/multi-server case. This results in a multi-client/multi-server architecture for process automation, wherein the computational resources of the servers can be shared and/or distributed among all clients in the network.

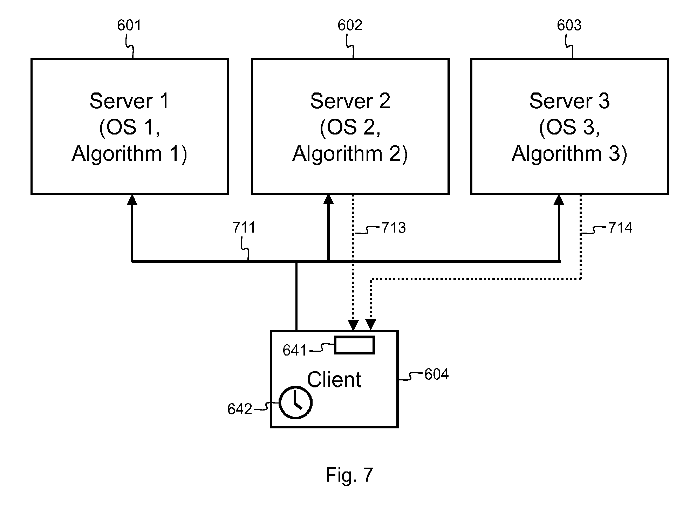

The multi-client/multi-server architecture described above enables to create highly reliable systems based on server hard- and software that does not necessarily exhibit the reliability of traditional automation hardware. If one of the servers fails to respond, clients will automatically select a response among the results produced by the other servers in the network. This scenario is illustrated by Fig. 7 which depicts the embodiment of the present invention drawn also in Fig. 6 at an instant where the first processing unit 601 is not able to timely respond to a request from the client actuating/sensing unit 604. The client 604 sends a request 711 to the servers 601, 602 and 603, e.g. a request for the timely evaluation of a control algorithm. Only servers 602 and 603 send back a response, respectively named 713 and 714 in Fig. 7. The missing response from the first server 601 is for example due to the fact that this processing unit 601 is down, suffers hardware or software failures, did not succeed in completing the requested task in time, is overloaded with other tasks or is simply not configured to respond to requests issued by client 604. This failure of the first processing unit 601 to respond to request 711 does not affect client 604 which simply selects the incoming response with the highest priority amongst 713 and 714.

Summarizing, the multi-client/multi-server architecture described in relation to Fig. 6 and Fig. 7 implements redundancy in a very natural manner. Contrary to a master-slave approach, redundant servers do not need to monitor each other explicitly. All servers are equivalent in a sense that there are no master or backup servers. It is up to the client to decide which response to use. Servers can be added, reconfigured and removed in run-time.

As already mentioned, the multi-client/multi-server architecture also allows different servers to run different algorithms in response to the same client request. In order to avoid duplicating software bugs, algorithmic implementations can be made to differ from one server to another. The only requirement is that all algorithms executed in response to the same client request must aim to provide similar functionality. This is called functional redundancy. For example, in response to a request coming from an actuating/sensing unit, one server may run a very complex algorithm the result of which is assigned a high priority while a second server runs a simplified version of the algorithm the result of which is assigned a lower priority.

In order to keep algorithms on different computation servers that all serve requests coming from the same client synchronized with each other, the client may communicate information about the actually selected response back to the servers involved. In a particular implementation, this information is transmitted via a separate message. In a variant implementation, this information is attached to the next client request for computational services.

The multi-client/multi-server architecture can be further enhanced through the implementation of load-balancing mechanisms. In order to distribute the load generated by the different clients on the network and to avoid excessive computational loads on a processor, a particular server may choose to respond only to requests from a particular subset of clients. Stated differently, a server may choose to deliberately ignore requests coming from particular clients. In one possible implementation, this behaviour is specified via static configuration. In another possible implementation, this behaviour is decided upon dynamically depending upon the instantaneous or average computational load of the different servers, their failure statistics or any other relevant criterion.

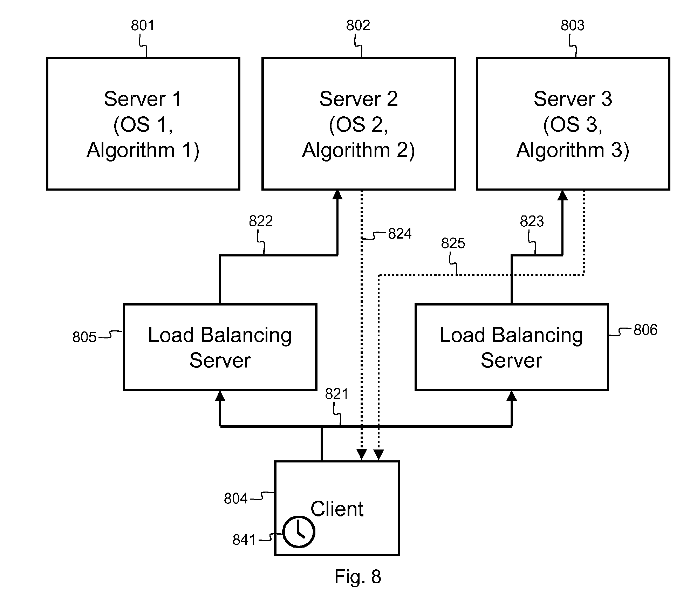

Fig. 8 illustrates a third embodiment of the current invention with a different implementation of the load balancing functionality. In this exemplary topology, load balancing is implemented by servers 805 and 806 that reroute client requests 821 coming from client actuating/sensing unit 804 to the actual computation servers 801, 802 and 803. Load balancing server 805 for instance reroutes client request 821 as request 822 to the second processing unit 802 whereas load balancing server 806 reroutes request 821 as request 823 to the third processing unit 803. The respective responses from the second server 802 and third server 803 are denoted by 824 and 825 in Fig. 8. Request 821 is not forwarded to the first processing unit 801, for instance because this server 801 is anticipated to be overloaded already at the time of arrival of the request 821 at the load balancing servers 805 and 806. The servers 805 and 806 directly addressed by the client 804 are dedicated to the task of rerouting the client requests, and thereto take into account the actual computational load on the processing units 801, 802 and 803. The client 804, triggered by its internal clock 841, selects one response out of the timely received responses 824 and 825 for deployment in the control process based on a prioritization scheme.

Other applications that can be built on top of the multi-client/multi-server architectures illustrated by Fig. 6, Fig. 7 and Fig. 8 include plug-and-play hardware replacement and replacing process control algorithms or other algorithms running on a server with new versions and this in run-time.

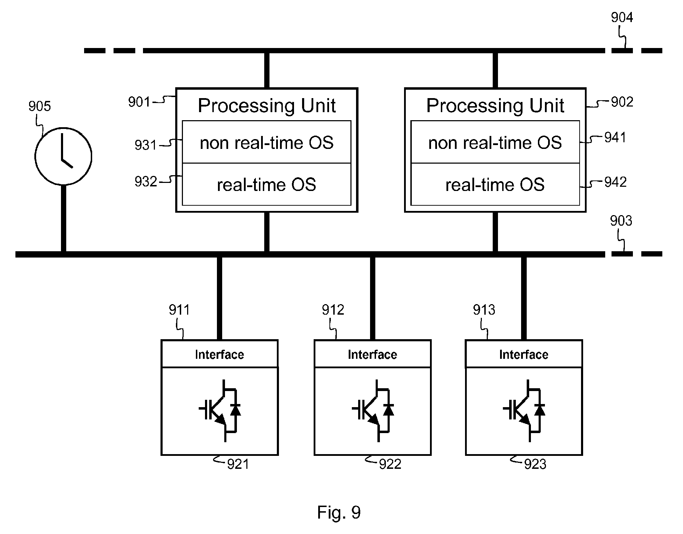

Fig. 9 shows a fourth embodiment of the present invention, suited for power electronics applications. Hereby, the clients actuating/sensing units are power sections comprising respective power converter valves, sensors for measuring currents, voltages and temperatures, signal processing hardware to convert all measurements in digital form, and signal processing hardware denoted by 921, 922 and 923 in Fig. 9, as well as communication interfaces 911, 912 and 913 to process the measurements, to transmit and receive messages to and from one or more computation servers such as 901 and 902, to select among the incoming responses, and to process the incoming responses to make the included results suited to be applied to the power converter valves. The latter may comprise the generation of the necessary PWM signals given the desired settings for the output voltages as included in the responses. A local clock in the clients, not drawn in Fig. 9, determines when requests are being sent and when responses are being applied to the power converter valves. The power converter valves can be configured as a transistor bridge or as a three-phase bridge connection, when the power section is configured as a converter or inverter.

The client power sections can be used, for example, to construct drive applications, and intelligent net interfaces. At regular instances in time, as determined by the local clock, the power section sends a request to evaluate a drive or other algorithm via network 903 to one or more computation servers such as 901 and 902. A request includes all of the necessary measurements needed for the server to evaluate the algorithms. The computation servers 901 and 902 evaluate the control algorithm and send their response back to the power section which selects the response with the highest priority. The computation servers 901 and 902 take into account implicit or explicit time constraints, and thereto run hybrid operating systems having a non real-time component, respectively 931 and 941, and a real-time component, respectively 932 and 942. Clocks in different power sections can be synchronized with a master clock 905 in order to coordinate their overall operation. Moreover, power applications realized using these power sections inherit all properties with regard to high reliability, load balancing, etc. from the more general process control systems described above. Lastly, Fig. 9 shows also the optional connectivity of the processing units 901 and 902 to an external network 904.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system for real-time process control, said system comprising:
a. a processing unit (501; 601; 801; 901);
b. at least one actuating/sensing unit (521, 522, 523; 604; 804; 921, 922, 923) able to communicate with said processing unit (501; 601; 801; 901) and adapted to act as at least one client and thereto having an onboard communication interface (511, 512, 513; 911, 912, 913) for client-server communication with said processing unit (501; 601; 801; 901); and
c. a network (503; 611; 711; 821, 822, 823; 903) interconnecting said processing unit (501; 601; 801; 901) and said at least one actuating/sensing unit (521, 522, 523; 604; 804; 921, 922, 923),
**CHARACTERIZED IN THAT**
d. said processing unit (501; 601; 801; 901) is adapted to act as a real-time computation server and to run thereto a real-time operating system or a hybrid real-time/non real-time operating system (531, 532; 931, 932); and said system comprises plural processing units (501, 502; 601, 602, 603; 801, 802, 803; 901, 902), similar to and including said processing unit (501; 601; 801; 901), said plural processing units (501, 502; 601, 602, 603; 801, 802, 803; 901, 902) being adapted to act as redundant real-time computation servers;
e. said at least one actuating/sensing unit (521, 522, 523; 604; 804; 921, 922, 923) is adapted to request evaluation of a computational task by at least part of said processing units (501, 502; 601, 602, 603; 801, 802, 803; 901, 902) through a message requesting timely evaluation of said computational task, said message implicitly or explicitly specifying a time constraint for said processing units (501, 502; 601, 602, 603; 801, 802, 803; 901, 902) to respond.

2. A system for real time process control according to claim 1,
**CHARACTERIZED IN THAT** said at least one actuating/sensing unit (921, 922, 923) form part of respective power section units; and said processing units (901, 902) are adapted to act as servers whereon said power section units are able to schedule said evaluation of said computational task.

3. A system for real-time process control according to claim 2,
**CHARACTERIZED IN THAT** said at least one actuating/sensing unit (921, 922, 923) is adapted to sense and digitize a current, a voltage, or a temperature, and to convert said current, voltage or temperature into a signal provided to form part of said message requesting timely evaluation of said computational task.

4. A system for real-time process control according to claim 1,
**CHARACTERIZED IN THAT** said at least one actuating/sensing unit (604) further comprise prioritizing means (641) adapted to select a response out of timely received responses (612, 613, 614; 713, 714) from said plural processing units (601, 602,603).

5. A system for real-time process control according to claim 1,
**CHARACTERIZED IN THAT** said plural processing units (601, 602, 603; 801, 802, 803) comprise different algorithms for evaluation of said computational task.

6. A system for real-time process control according to claim 1,
**CHARACTERIZED IN THAT** said plural processing units (601, 602, 603; 801, 802, 803) are adapted to run different real-time or hybrid real-time/non real-time operating systems.

7. A system for real-time process control according to claim 1,
**CHARACTERIZED IN THAT** said system comprises load balancing means (805, 806) adapted to balance computational load caused by said at least one actuating/sensing unit (804) over said plural processing units (801, 802, 803).

8. A method for real-time process control in a system having a processing unit (501; 601; 801; 901), at least one actuating/sensing unit (521, 522, 523; 604; 804; 921, 922, 923) communicating with said processing unit (501; 601; 801; 901), and a network (503; 611; 711; 821, 822, 823; 903) interconnecting said processing unit (501; 601; 801; 901) and said at least one actuating/sensing unit (521, 522, 523; 604; 804; 921, 922, 923), said method comprising the steps of:
a. sending a message requesting timely evaluation of a computational task from an onboard communication interface (511, 512, 513; 911, 912, 913) of an actuating/sensing unit out of said at least one actuating/sensing unit (521, 522, 523; 604; 804; 921, 922, 923) to plural processing units (501, 502; 601, 602, 603; 801, 802, 803; 901, 902), similar to and including said processing unit (501; 601; 801; 901), said plural processing units (501, 502; 601, 602, 603; 801, 802, 803; 901, 902) acting as redundant real-time computation servers, said message implicitly or explicitly specifying a time constraint for said processing units (501, 502; 601, 602, 603; 801, 802, 803; 901, 902) to respond;
b. receiving said message in said processing units (501, 502; 601, 602, 603; 801, 802, 803; 901, 902);
c. real-time executing said computational task in said processing units (501, 502; 601, 602, 603; 801, 802, 803; 901, 902), running thereto a real-time operating system or a hybrid real-time/non real-time operating system (531, 532; 931, 932); and
d. sending a response message from said processing units (501, 502; 601, 602, 603; 801, 802, 803; 901, 902) acting as a server to said actuating/sensing unit acting as a client.

9. A method for real-time process control according to claim 8,
**CHARACTERIZED IN THAT** said method comprises balancing computational load caused by said at least one actuating/sensing unit (804) over said plural processing units (801, 802, 803).
